# EUROPÄISCHE PATENTANMELDUNG

(11) **EP 2 369 148 A2**
(43) Veröffentlichungstag der Anmeldung: **28.09.2011**
(21) Anmeldenummer: 11151805.6
(22) Anmeldetag: 24.01.2011
(51) Int. Cl.: F01N 3/04

(54) **Kühlvorrichtung**

(30) Priorität: 26.03.2010 DE 102010013111
(71) Anmelder: Pierburg GmbH, 41460 Neuss (DE)
(72) Erfinder: Hüsges, Hans-Jürgen, 47877, Willich (DE); Kühnel, Hans-Ulrich, 41239, Mönchengladbach (DE)
(74) Vertreter: Patentanwälte ter Smitten

(57) **Zusammenfassung**

Kühlvorrichtung, insbesondere Abgaskühlvorrichtung, für eine Verbrennungskraftmaschine mit einem Außengehäuse, in dem zumindest eine Wärmeübertragungseinheit angeordnet ist, wobei das Außengehäuse einen Kühlmitteleinlass sowie einen Kühlmittelauslass aufweist, derart, dass die Wärmeübertragungseinheit von einem Kühlmittel umströmt ist, wobei die Wärmeübertragungseinheit einen Fluideinlass und einen Fluidauslass aufweist, die durch einen Fluidkanal miteinander verbunden sind, wobei der Fluidkanal Wärmeleitrippen besitzt, derart, dass beim Durchströmen des Fluidkanals ein Wärmeaustausch zwischen dem Fluid und den Wärmeleitrippen stattfindet, **dadurch gekennzeichnet, dass**
in der Wärmeübertragungseinheit mindestens ein Führungsblech angeordnet ist, wobei das Führungsblech jeweils eine Seitenwand eines Fluidkanalabschnitts bildet, die sich parallel zu den Wärmeleitrippen erstreckt.

## Beschreibung

Die Erfindung betrifft eine Kühlvorrichtung, insbesondere Abgaskühlvorrichtung, für eine Verbrennungskraftmaschine mit einem Außengehäuse, in dem zumindest eine Wärmeübertragungseinheit angeordnet ist, wobei das Außengehäuse einen Kühlmitteleinlass, sowie einen Kühlmittelauslass aufweist, derart, dass die Wärmeübertragungseinheit von einem Kühlmittel umströmt ist, wobei die Wärmeübertragungseinheit einen Fluideinlass und einen Fluidauslass aufweist, die durch ein Fluidkanal miteinander verbunden sind, wobei der Fluidkanal Wärmeleitrippen besitzt, derart, dass beim Durchströmen des Fluidkanals ein Wärmeaustausch zwischen dem Fluid und den Wärmeleitrippen stattfindet.

Derartige Kühlvorrichtungen sind allgemein bekannt und werden in einer Vielzahl von Anmeldungen beschrieben. Dabei sind insbesondere Wärmetauscher bekannt, die von einem Kühlmittel, das sich zwischen dem Außengehäuse und dem Wärmetauscher befindet, umströmt werden, und die nach innen, also zum Fluidkanal hin gerichtete Wärmeleitrippen aufweisen. Diese Wärmeleitrippen verbessern den Wärmeübergang zwischen dem Kühlmittel und dem zu kühlenden Fluid deutlich. Insbesondere vergrößern die Rippen die Verweilzeit und den Staudruck im Fluidkanal im Vergleich zur Ausführung ohne Rippen. Bei einem Wärmetauscher, der als Abgaswärmetauscher in Verbrennungskraftmaschinen benutzt wird, können solche Rippen auch verwendet werden, um eine Versottung bzw. Verrußung des abgasdurchströmten Kanals weitgehend zu verhindern.

So wird in der US 6,173,758 B1 ein Wärmetauscher beschrieben, der eine Vielzahl von in den Fluidkanal reichenden Wärmeleitrippen aufweist. Um nun den Fluidkanal zu verlängern und damit die Verweilzeit des Fluids im Wärmetauscher zu erhöhen mit der Folge, dass ein besserer Wirkungsgrad des Wärmetauschers erzielt wird, beschreibt diese Schrift eine Zwischenwand, die den Fluidkanal in zwei Fluidkanalabschnitte teilt, die nacheinander U-förmig durchströmt werden.

Nachteilig an einer derartigen Ausführung ist, dass für spezifische Motoranforderungen jeweils eine bestimmte Kühlvorrichtung entwickelt werden muss. Eine fertigungstechnisch einfache Anpassung an eine geforderte Kühlleistung der Kühlvorrichtung ist nicht möglich.

Daher ist es Aufgabe der Erfindung, eine Kühlvorrichtung zu schaffen, die den oben genannten Nachteil vermeidet.

Diese Aufgabe wird dadurch gelöst, dass in der Wärmeübertragungseinheit mindestens ein Führungsblech angeordnet ist, wobei das Führungsblech jeweils eine Seitenwand eines Fluidkanalabschnitts bildet, die sich parallel zu den Wärmeleitrippen erstreckt. Auf diese Weise ist es möglich, die Kühlvorrichtung mittels Führungsblechen den unterschiedlichen Anforderungen anzupassen. So kann der Fluidkanal durch eine Variation der Anzahl von Führungsblechen verdoppelt, verdreifacht oder auch vervierfacht werden. Durch die Wahl der Anordnung eines Führungsbleches ist es auch möglich, die Durchflussgröße der einzelnen Fluidkanalabschnitte zu verändern.

In einer bevorzugten Ausführung ist das Vorführungsblech zwischen den Wärmeleitrippen und der Wärmeübertragungseinheit verklemmt. Um den Wirkungsgrad noch weiter zu vergrößern, ist zwischen der Außenschale und der Wärmeübertragungseinheit ein schraubenförmiger Leitsteg für den Kühlmittelstrom vorgesehen. Hierdurch wird auch gewährleistet, dass die Verweilzeit des Kühlmittels in der Kühlvorrichtung ausreichend lang ist. Dabei kann der Leitsteg im Wesentlichen durch Formstücke, wie z.B. Aluminium-, oder Kunststoffbügel ausgebildet sein, wobei die Formstücke auf der Wärmeübertragungseinheit verklemmt sind.

Eine erfindungsgemäße Ausführung des Kühlvorrichtung ist in den Figuren dargestellt und wird nachfolgend beschrieben.
Fig. 1 zeigt eine Draufsicht auf eine erfindungsgemäße Kühlvorrichtung in geschnittener Darstellung.
Fig. 2 zeigt eine Draufsicht auf die Kühlvorrichtung mit geöffnetem Außengehäuse und geschlossener Wärmeübertragungseinheit.

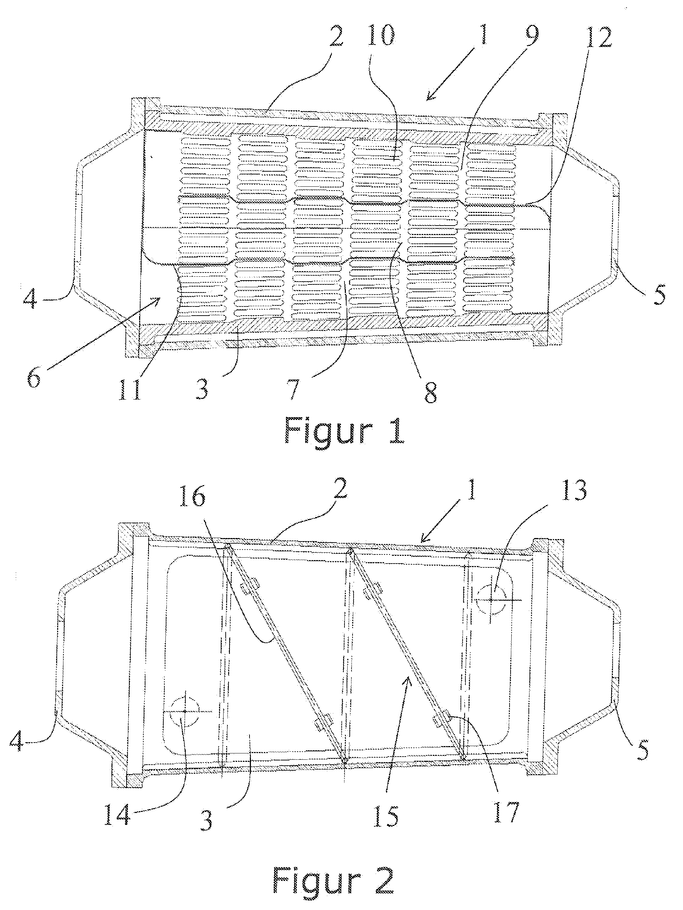

Die in den Figuren dargestellte Kühlvorrichtung, die vorzugsweise als Abgaskühlvorrichtung in Kraftfahrzeugen verwendet wird, besteht aus einem Außengehäuse 2, in dem eine Wärmeübertragungseinheit 3 angeordnet ist. Zwischen dem Außengehäuse 2 und der Wärmeübertragungseinheit 3 entsteht nach dem Zusammenbau ein vom Kühlmittel durchströmter Kanal (hierzu siehe insbesondere Fig. 2). Desweiteren weist das Außengehäuse 2 einen Fluideinlass 4 und einen Fluidauslass 5 auf, die im vorliegenden Fall als Abgaseinlass 4 und Abgasauslass 5 bezeichnet werden. Zwischen dem Abgaseinlass 4 und dem Abgasauslass 5 ist ein Fluidkanal, hier Abgaskanal 6 ausgebildet, der sich im vorliegenden Fall in drei Abgaskanalabschnitte 7, 8 und 9 unterteilt. Die Wärmeübertragungseinheit 3 weist auf bekannte Weise Wärmeleitrippen 10 auf, die derart in den Abgaskanal reichen, dass beim Durchströmen des Abgaskanals 6 ein Wärmeaustausch zwischen dem Abgas und den Wärmeleitrippen 10 stattfindet.

Die einzelnen Abgaskanalabschnitte werden hierbei durch Führungsbleche 11, 12 gebildet, die zwischen den Wärmeleitrippen 10 und der Wärmeübertragungseinheit 3 verklemmt sind. Hierdurch ist es auf besonders einfache und kostengünstige Weise möglich, eine Wärmeübertragungseinheit an die verschiedenen Anforderungen hinsichtlich Kühlleistung einer Brennkraftmaschine anzupassen.

Fig. 2 zeigt nun eine Draufsicht auf die erfindungsgemäße Kühlvorrichtung 1 mit geöffnetem Außengehäuse 2 und geschlossener Wärmeübertragungseinheit 3. Im Außengehäuse sind ein Kühlmitteleinlass und ein Kühlmittelauslass vorgesehen, von denen in der vorliegenden Ansicht die jeweiligen Positionen 13 und 14 angedeutet sind. Zwischen dem Außengehäuse 2 und der Wärmeübertragungseinheit 3 ist ein schraubenförmiger Leitsteg 15 vorgesehen, der eine vollumfängliche Umströmung der Wärmeübertragungseinheit mit Kühlmittel gewährleistet. Die grundsätzliche Durchstromrichtung von Kühlmitteleinlass 13 zu Kühlmittelauslass 14 des Kühlmittels in der grundsätzlichen Durchströmrichtung des Abgases von Abgaseinlass 4 zu Abgasauslass 5 entgegengerichtet, wodurch der Wirkungsgrad der Kühlvorrichtung noch einmal erhöht werden kann. Der Leitsteg 15 wird im Wesentlichen durch Formstücke, wie z.B. Aluminium-, oder Kunststoffbügel ausgebildet. Die Formstücke 16 sind dabei mittels Klemmmitteln 17 auf der Wärmeübertragungseinheit verklemmt und können mit nicht weiter dargestellten Schweißnähten zusammenwirken, um den Leitsteg 15 zu bilden.

## Patentansprüche

1. Kühlvorrichtung, insbesondere Abgaskühlvorrichtung, für eine Verbrennungskraftmaschine mit einem Außengehäuse, in dem zumindest eine Wärmeübertragungseinheit angeordnet ist, wobei das Außengehäuse einen Kühlmitteleinlass sowie einen Kühlmittelauslass aufweist, derart, dass die Wärmeübertragungseinheit von einem Kühlmittel umströmt ist, wobei die Wärmeübertragungseinheit einen Fluideinlass und einen Fluidauslass aufweist, die durch einen Fluidkanal miteinander verbunden sind, wobei der Fluidkanal Wärmeleitrippen besitzt, derart, dass beim Durchströmen des Fluidkanals ein Wärmeaustausch zwischen dem Fluid und den Wärmeleitrippen stattfindet, **dadurch gekennzeichnet, dass** in der Wärmeübertragungseinheit (3) mindestens ein Führungsblech (11, 12)angeordnet ist, wobei das Führungsblech (11, 12) jeweils eine Seitenwand eines Fluidkanalabschnitts (7, 8, 9) bildet, die sich parallel zu den Wärmeleitrippen erstreckt.

2. Kühlvorrichtung nach Anspruch 1, **dadurch gekennzeichnet, dass** das Führungsblech (11, 12) zwischen den Wärmeleitrippen (10) und der Wärmeübertragungseinheit (3) verklemmt ist.

3. Kühlvorrichtung nach Anspruch 1 oder 2, **dadurch gekennzeichnet, dass** wobei zwischen der Außengehäuse (2) und der Wärmeübertragungseinheit (3) ein schraubenförmiger Leitsteg (15) für den Kühlmittelstrom vorgesehen ist.

4. Kühlvorrichtung nach Anspruch 3, **dadurch gekennzeichnet, dass** der Leitsteg (15) im Wesentlichen durch Formstücke (16), wie zum Beispiel Aluminium-, Kunststoffbügel ausgebildet ist, wobei die Formstücke (16) auf der Wärmeübertragungseinheit verklemmt sind.
